(19) Europäisches Patentamt

European Patent Office

Office européen des brevets

(11) EP 0 828 335 B1

(12) FASCICULE DE BREVET EUROPEEN

(45) Date de publication et mention
de la délivrance du brevet:
**16.02.2005 Bulletin 2005/07**

(51) Int Cl.⁷: **H02K 3/28**

(21) Numéro de dépôt: **97402102.4**

(22) Date de dépôt: **10.09.1997**

(54) **Alternateur de véhicule automobile à enroulements triphasés**

Kraftfahrzeuggenerator mit Dreiphasenwicklungen

Motor vehicle generator with three-phase windings

(84) Etats contractants désignés:
**DE ES GB IT**

(30) Priorité: **10.09.1996 FR 9611023**

(43) Date de publication de la demande:
**11.03.1998 Bulletin 1998/11**

(73) Titulaire: **VALEO EQUIPEMENTS ELECTRIQUES MOTEUR**
**94000 Creteil (FR)**

(72) Inventeur: **Dubus, Jean-Marc**
**94380 Bonneuil/Marne (FR)**

(74) Mandataire: **Le Forestier, Eric et al**
**Cabinet Régimbeau**
**20, rue de Chazelles**
**75847 Paris cedex 17 (FR)**

(56) Documents cités:
**DE-A- 1 563 389**    **FR-A- 2 219 559**
**US-A- 4 117 390**    **US-A- 5 449 962**

**Description**

La présente invention est relative à un alternateur de véhicule automobile à enroulements triphasés.

Classiquement, un alternateur présente un ensemble statorique dont les enroulements sont couplés à un ensemble redresseur dont le rôle est de transformer le courant alternatif en sortie de cet ensemble statorique en un courant continu.

Les bobinages statoriques sont montés dans des encoches d'un bloc de tôles feuilletées disposées annulairement à l'intérieur de la carcasse du stator, avec par exemple une encoche par phase et par pôle.

Ces bobinages sont habituellement couplés en étoile ou en triangle, ou encore selon des montages combinant en parallèle un montage étoile et un montage triangle.

Toutefois, les alternateurs pour véhicule automobile présentent souvent, dans une plage déterminée de vitesse, des bruits gênants pour le confort de l'automobiliste.

Ces bruits peuvent avoir une origine électromagnétique et en particulier être dus à l'harmonique 3 de la fréquence de rotation, qui est croissante avec la vitesse et dont les ondulations correspondantes sont additionnées par les moyens redresseur.

Un but de l'invention est donc de proposer un alternateur, notamment de véhicule automobile, dans lequel le taux d'harmonique 3 est réduit et le bruit électromagnétique considérablement diminué.

Il a déjà été proposé dans US 5,449,962 un stator de véhicule automobile présentant un montage triangle/étoile, dont les branches en étoile sont chacune constituées par deux bobinages en phase ou en opposition de phase avec les bobinages du montage en triangle. Les deux bobinages d'une branche du montage en étoile sont montés en série et sont tels que leur tension résultante est déphasée de 30° par rapport aux tensions des bobinages du montage triangle auxquels ladite branche est reliée.

Un tel agencement permet de coupler un montage étoile et un montage triangle en utilisant les mêmes encoches pour les bobinages du montage étoile et du montage triangle. Il permet donc un nombre d'encoches réduit par rapport à un montage étoile/triangle classique.

Il est indiqué dans ce document qu'un rapport de 1 à 3 entre le nombre de spires des bobinages des branches du montage en étoile et le nombre de spires des bobinages du montage en triangle permet une suppression du bruit magnétique.

L'invention propose quant à elle un autre montage ne nécessitant pas de faire appel à une combinaison de montages en triangle et en étoile, et permettant l'élimination de l'harmonique 3 et donc la réduction du bruit électromagnétique.

On connaît déjà par FR 2 219 559 des montages d'enroulement de machine électrique utilisant trois enroulements en série répartis dans trois groupes d'encoches correspondant à des déphasages de $\pi/3$ ou $2\pi/3$ (cf en particulier figure 5).

Les structures qui sont proposées dans cette demande de brevet ne permettent pas la compensation des harmoniques 3 des enroulements.

L'invention propose un alternateur de véhicule automobile à enroulements triphasés comportant trois branches montées en triangle ou en étoile, ces trois branches étant chacune constituées par au moins trois enroulements en série ces enroulements étant répartis dans trois groupes d'encoches correspondant à des déphasages électriques de $\pi/3$ ou $2\pi/3$, caractérisé en ce que le nombre de spires et le sens des enroulements sont tels que les harmoniques 3 des enroulements constituant une branche se compensent.

D'autres avantages de l'invention ressortiront encore de la description qui suit. Cette description est purement illustrative et non limitative. Elle doit être lue en regard des dessins annexés sur lesquels :

- la figure 1 est une représentation schématique illustrant la disposition des enroulements des différentes branches d'un montage en triangle conforme à un mode de réalisation possible pour l'invention ;
- la figure 2 est une représentation de Fresnel de trois tensions fondamentales de même amplitude et déphasées de $2\pi/3$ ;
- la figure 3a est un graphe sur lequel on a porté une représentation temporelle d'une tension fondamentale de la figure 2, d'un harmonique 3 se superposant à cette tension fondamentale, ainsi que d'une tension correspondant à la superposition de cette tension fondamentale et dudit harmonique 3 ;
- la figure 3b est une représentation temporelle de trois tensions correspondant aux trois tensions fondamentales représentées sur la figure 2 auxquelles sont superposés des harmoniques 3 ;
- la figure 3c est une représentation temporelle de la tension en sortie d'une branche du montage de la figure 1 ;
- les figures 4a à 4c illustrent respectivement pour chacune des branches du montage de la figure 1 la disposition des enroulements de ces branches dans les encoches du stator.

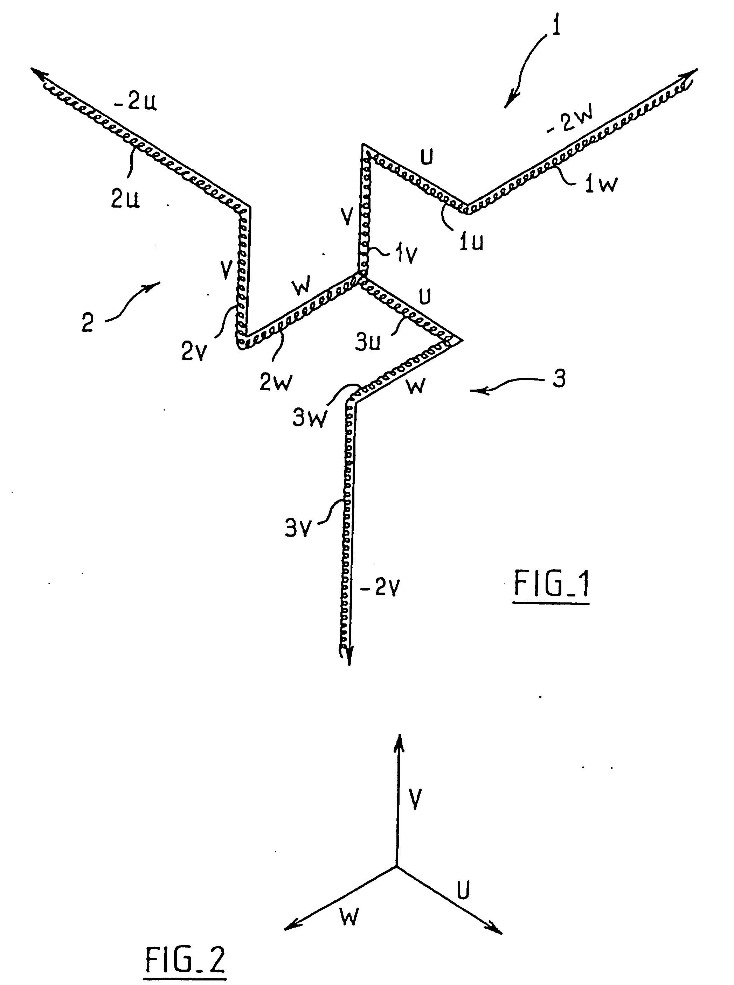

Le stator illustré sur la figure 1 présente neuf enroulements connectés de façon à définir un montage en étoile dont les trois branches, référencées de 1 à 3, sont déphasées de 120° les unes par rapport aux autres.

Chacune des branches 1 à 3 est constituée de trois enroulements montés en série.

Sur la figure 1, les enroulements de la branche 1 sont référencés $1_u$, $1_v$ et $1_w$ ; ceux de la branche 2 sont référencés $2_u$, $2_v$ et $2_w$ ; ceux de la branche 3 sont référencés $3_u$, $3_v$ et $3_w$.

Les trois enroulements de chacune des branches 1 à 3 sont répartis dans trois groupes d'encoches disposées à l'intérieur de la carcasse.

Ces trois groupes d'encoches sont les mêmes pour chacune des branches du montage, chaque groupe d'encoches recevant un enroulement de chacune des trois branches, les trois enroulements répartis dans le même groupe d'encoches étant en phase ou en opposition de phase.

Les enroulements de ces trois groupes d'encoches sont électriquement déphasés deux à deux de $\pi/3$ ou de $2\pi/3$.

A titre d'exemple dans le cas d'un stator à 36 encoches régulièrement réparties en son intérieur (1 encoche par phase et par pôle), les groupes d'encoches comprennent chacun douze encoches et sont décalés deux à deux d'une encoche.

Ainsi, les forces électromotrices générées sur les trois enroulements de chacune des branches 1 à 3 sont, aux harmoniques près, proportionnelles à des tensions fondamentales u, v, w de même amplitude et déphasées deux à deux de $2\pi/3$. Une représentation schématique de ces tensions u, v, w est donnée sur la figure 2.

Pour chacune des branches 1 à 3, deux des enroulements présentent un même nombre de spires et sont déphasés de $2\pi/3$ l'un par rapport à l'autre, le troisième enroulement présentant un nombre de spires double et étant déphasé de $\pi/3$ et de $-\pi/3$ par rapport aux deux autres.

Ainsi, dans l'exemple illustré sur la figure 1, les forces électromotrices développées dans les enroulements $1_u$ et $1_v$ correspondent aux tensions fondamentales u et v auxquelles est superposé un harmonique 3, tandis que l'enroulement $1_w$ correspond à la tension fondamentale $-2w$, à laquelle est également superposé un harmonique 3.

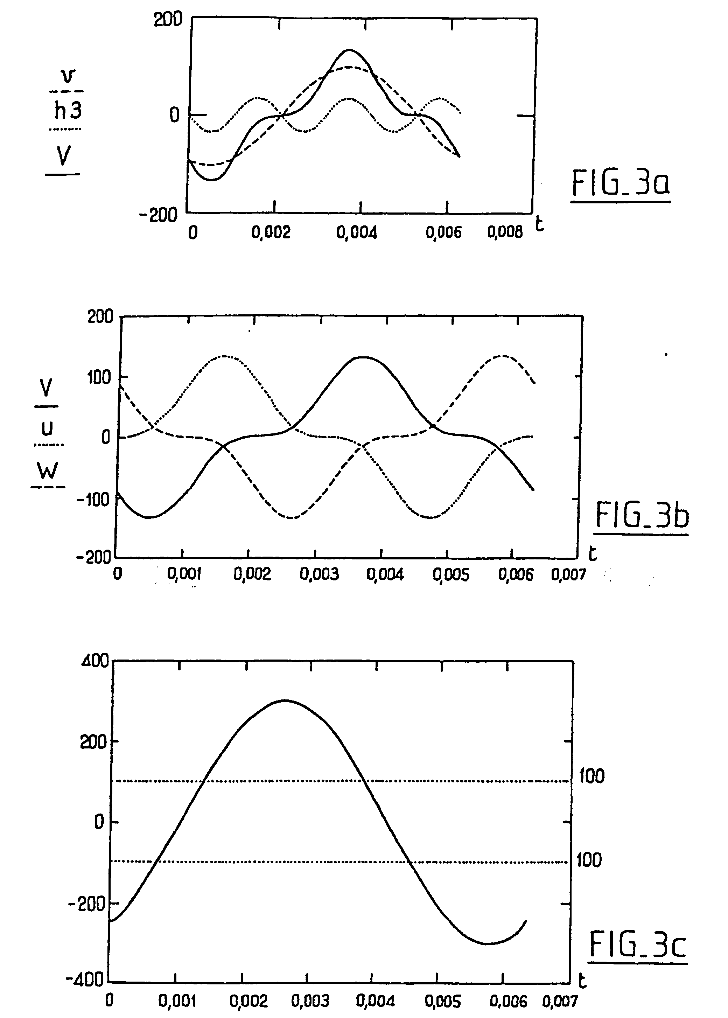

On a représenté sur la figure 3a la tension fondamentale v, l'harmonique 3(h3) qui lui est superposé, ainsi que la tension V résultant de cette superposition.

Sur la figure 3b, on a représenté cette tension V avec les tensions U et W qui correspondent aux tensions fondamentales u et v, auxquelles sont superposés des harmoniques 3.

Les harmoniques 3 des tensions sur les branches 1u et 1v sont en phase et s'additionnent, l'amplitude de leur résultante étant égale au double de leur amplitude.

Cette résultante est déphasée de $\pi$ par rapport à l'harmonique 3 sur l'enroulement $1_w$, dont l'amplitude est par ailleurs double de celle sur les enroulements $1_u$ et $1_v$. La sommation des tensions sur les trois enroulements $1_u$, $1_v$ et $1_w$ conduit donc à l'élimination de l'harmonique 3.

Par conséquent, la tension résultante U + V - 2W sur la branche 1 est égale à u + v - 2w et est exempte d'harmonique 3.

On a représenté cette tension résultante sur la figure 3c.

On constate sur cette figure 3c que cette tension résultante ne présente pas les harmoniques 3 qui apparaissent sur courbes représentées sur les figures 3a et 3b.

Ce qui vient d'être décrit pour la branche 1 s'applique bien entendu de la même façon pour les branches 2 et 3, pour lesquelles la disposition des enroulements dans les groupes d'encoches correspond, à une permutation circulaire près, à celle des enroulements de la branche 1.

Ainsi, les forces électromotrices développées dans les enroulements $2_v$ et $2_w$ de la branche 2 correspondent, aux harmoniques près, aux tensions fondamentales v et w tandis que celle de l'enroulement $2_u$ correspond à -2u.

De même pour la branche 3 - et toujours aux harmoniques près - les forces électromotrices développées sur les enroulements $3_u$ et $3_w$ correspondent aux tensions fondamentales u et w, tandis que celle de l'enroulement $3_v$ correspond à -2v.

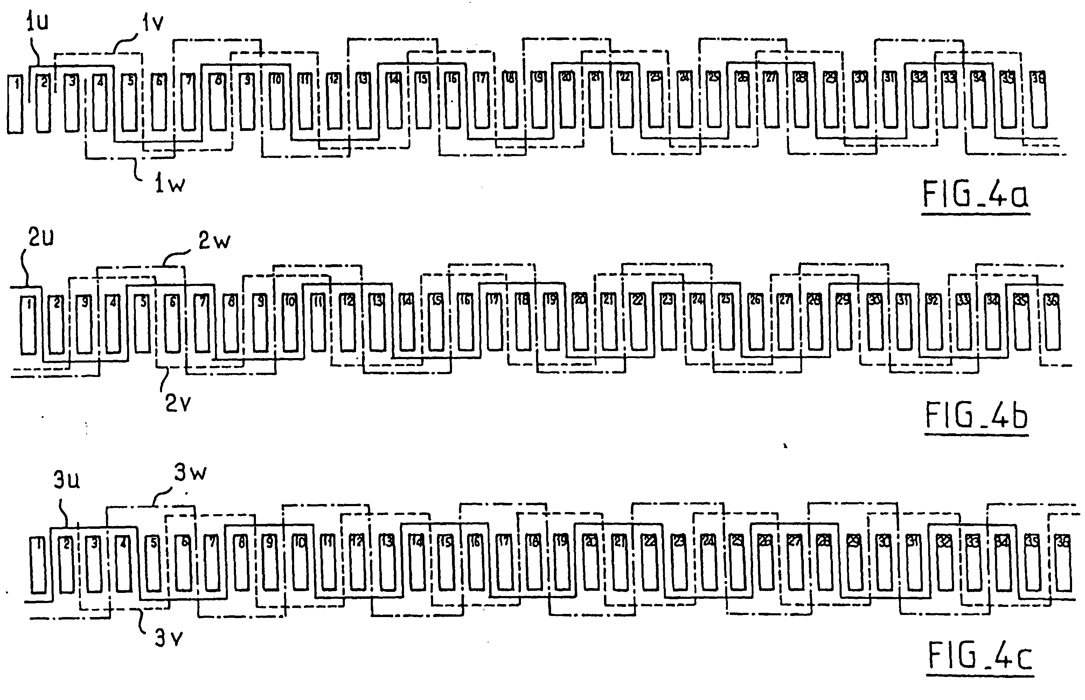

A titre illustratif, on a représenté de façon développée sur les figures 4a, 4b et 4c la disposition de ces différents enroulements dans les encoches du stator respectivement pour la branche 1 (figure 4a), pour la branche 2 (figure 4b) et pour la branche 3 (figure 4c).

D'autres variantes de réalisation de l'invention sont bien entendu possibles.

En particulier, les trois phases peuvent être obtenues autrement qu'en permutant les dispositions dans les encoches d'une branche à l'autre.

Egalement, l'invention a été décrite dans le cas d'un alternateur à montage statorique en triangle, mais s'applique bien entendu de la même façon dans le cas d'un montage en étoile.

En variante encore, chacune des branches du montage peut être constituée par plus de trois enroulements, par exemple par quatre enroulements présentant chacun le même nombre de spires.

Par exemple, les enroulements u1, u2, u3 et u4 étant disposés dans un premier groupe d'encoches, les enroulements v1, v2, v3 et v4 dans un deuxième groupe d'encoches et les enroulements w1, w2, w3 et w4 dans un troisième groupe d'encoches, les trois branches peuvent respectivement être constituées des combinaisons :

$$u1 + v2 - (w3 + w4)$$

$$v1 + w2 - (u3 + u4)$$

$$w1 + u2 - (v3 + v4)$$

Ainsi, sur une même branche, les deux enroulements qui sont répartis dans le même groupe d'encoches sont en phase et déphasés de $\pm \pi/3$ par rapport

aux deux autres enroulements qui sont quant à eux déphasés de 2π/3 l'un par rapport à l'autre.

On notera qu'étant donné que la force électromotrice aux bornes des montages qui viennent d'être décrits est inférieure à la simple sommation arithmétique aux bornes des différents enroulements, il est nécessaire, à force électromotrice égale, d'utiliser une plus grande masse de cuivre, ce qui entraîne des pertes joules, ainsi qu'une perte de rendement.

Toutefois, ces effets sont largement compensés par la suppression de l'harmonique 3 qui entraîne d'une part la diminution du courant efficace dans les enroulements, et donc une diminution des pertes joules et d'autre part la suppression totale des pertes par hystérésis et par courants de Foucault correspondant à cet harmonique.

## Revendications

1. Alternateur de véhicule automobile à enroulements triphasés comportant trois branches (1 à 3) montées en triangle ou en étoile, ces trois branches (1 à 3) étant chacune constituées par au moins trois enroulements en série ($1_u$, $1_v$, $1_w$ ; $2_u$, $2_v$, $2_w$ ; $3_u$, $3_v$, $3_w$), ces enroulements ($1_u$, $1_v$, $1_w$ ; $2_u$, $2_v$, $2_w$ ; $3_u$, $3_v$, $3_w$) étant répartis dans trois groupes d'encoches correspondant à des déphasages électriques de π/3 ou 2π/3, **caractérisé en ce que** le nombre de spires et le sens des enroulements ($1_u$, $1_v$, $1_w$ ; $2_u$, $2_v$, $2_w$ ; $3_u$, $3_v$, $3_w$) sont tels que les harmoniques 3 des enroulements constituant une branche (1 à 3) se compensent.

2. Alternateur selon la revendication 1, **caractérisé en ce que** chaque branche (1 à 3) est constituée de trois enroulements ($1_u$, $1_v$, $1_w$ ; $2_u$, $2_v$, $2_w$ ; $3_u$, $3_v$, $3_w$), dont deux sont déphasés de 2π/3 et présentent un même nombre de spires, le troisième enroulement étant déphasé de π/3 par rapport aux deux autres et présentant un nombre de spires double.

3. Alternateur selon la revendication 1, **caractérisé en ce que** chaque branche est constituée de quatre enroulements présentant le même nombre de spires, les deux enroulements qui sont répartis dans le même groupe d'encoches étant en phase et déphasé de ± π/3 par rapport aux deux autres enroulements qui sont quant à eux déphasés de 2π/3 l'un par rapport à l'autre.

4. Alternateur à montage en étoile selon l'une des revendications 1 ou 2.

5. Alternateur à bobinage en triangle selon l'une des revendications 1 ou 2.

## Patentansprüche

1. Wechselstromgenerator für Kraftfahrzeuge mit Dreiphasenwicklungen, umfassend drei in Dreieckschaltung oder in Sternschaltung geschaltete Schaltungsstränge (1 bis 3), wobei diese drei Schaltungsstränge (1 bis 3) jeweils aus wenigstens drei in Reihe geschalteten Wicklungen ($1_u$, $1_v$, $1_w$; $2_u$, $2_v$, $2_w$; $3_u$, $3_v$, $3_w$) bestehen, wobei diese Wicklungen($1_u$, $1_v$, $1_w$; $2_u$, $2_v$, $2_w$; $3_u$, $3_v$, $3_w$) in drei Nutengruppen verteilt sind, die elektrischen Phasenverschiebungen um π/3 oder 2π/3 entsprechen, **dadurch gekennzeichnet, daß** die Windungszahl und der Wickelsinn der Wicklungen ($1_u$, $1_v$, $1_w$; $2_u$, $2_v$, $2_w$; $3_u$, $3_v$, $3_w$) so ausfallen, daß sich die 3. Oberschwingungen der einen Schaltungsstrang (1 bis 3) bildenden Wicklungen aufheben.

2. Wechselstromgenerator nach Anspruch 1, **dadurch gekennzeichnet, daß** jeder Schaltungsstrang (1 bis 3) aus drei Wicklungen ($1_u$, $1_v$, $1_w$; $2_u$, $2_v$, $2_w$; $3_u$, $3_v$, $3_w$) besteht, von denen zwei um 2π/3 phasenverschoben sind und eine gleiche Windungszahl aufweisen, während die dritte im Verhältnis zu den beiden anderen um π/3 phasenverschoben ist und eine doppelte Windungszahl aufweist.

3. Wechselstromgenerator nach Anspruch 1, **dadurch gekennzeichnet, daß** jeder Schaltungsstrang aus vier Wicklungen besteht, die die gleiche Windungszahl aufweisen, wobei die zwei Wicklungen, die in der gleichen Nutengruppe verteilt sind, gleichphasig und im Verhältnis zu den beiden anderen Wicklungen um ±π/3 phasenverschoben sind, die ihrerseits im Verhältnis zueinander um 2π/3 phasenverschoben sind.

4. Wechselstromgenerator mit Sternschaltung nach einem der Ansprüche 1 oder 2.

5. Wechselstromgenerator mit Dreieckwicklung nach einem der Ansprüche 1 oder 2.

## Claims

1. Motor vehicle alternator with three-phase windings comprising three arms (1 to 3) connected in delta or star mode, these three arms (1 to 3) each consisting of at least three windings in series ($1_u$, $1_v$, $1_w$; $2_u$, $2_v$, $2_w$; $3_u$, $3_v$, $3_w$), these windings ($1_u$, $1_v$, $1_w$; $2_u$, $2_v$, $2_w$; $3_u$, $3_v$, $3_w$) being distributed in three groups of recesses corresponding to electrical phase differences of π/3 or 2π/3, **characterised in that** the number of turns and the direction of the windings ($1_u$, $1_v$, $1_w$; $2_u$, $2_v$, $2_w$; $3_u$, $3_v$, $3_w$) are such that the third harmonics of the windings constituting an arm (1 to 3) compensate for each other.

2. Alternator according to Claim 1, **characterised in that** each arm (1 to 3) consists of three windings ($1_u$, $1_v$, $1_w$; $2_u$, $2_v$, $2_w$; $3_u$, $3_v$, $3_w$), two of which are out of phase by $2\pi/3$ and have the same number of turns, the third winding being out of phase by $\pi/3$ with respect to the other two and having double the number of turns.

3. Alternator according to Claim 1, **characterised in that** each arm consists of four windings having the same number of turns, the two windings which are distributed in the same group of recesses being in phase and out of phase by $\pm\,\pi/3$ with respect to the other two windings, which for their part are out of phase by $2\pi/3$ with respect to one another.

4. Star-connected alternator according to one of Claims 1 or 2.

5. Delta-winding alternator according to one of Claims 1 or 2.

FIG.1

FIG.2

FIG. 3a

FIG. 3b

FIG. 3c

FIG_4a

FIG_4b

FIG_4c